# EUROPEAN PATENT APPLICATION

(11) **EP 4 801 157 A1**
(43) Date of publication of application: **02.09.2026**
(21) Application number: 23960153.7
(22) Date of filing: 29.11.2023
(51) Int. Cl.: H04W 72/0457, H04W 16/28, H04W 56/00

(54) **NETWORK NODE, USER DEVICE, AND COMMUNICATION METHOD**

(71) Applicant: Kyocera Corporation, Kyoto-shi, Kyoto 612-8501 (JP)
(72) Inventor: ZENKYU, Ryuji, Kyoto-shi, Kyoto 612-8501 (JP)
(74) Representative: Viering, Jentschura & Partner mbB Patent- und Rechtsanwälte
(86) International application number: PCT/JP2023/042763
(87) International publication number: WO 2025/115133

(57) **Abstract**

A network node according to a first aspect is a network node configured to manage a cell in a mobile communication system. The network node includes: a transmitter configured to transmit a synchronization signal block used for a cell search performed by a user equipment through beamforming; and a controller configured to perform beam sweeping that switches a transmission beam direction of the synchronization signal block at a predetermined time interval. The controller controls the transmitter to simultaneously transmit N (N is an integer of 2 or greater) of the synchronization signal blocks at different frequencies within a band of the cell.

## Description

### TECHNICAL FIELD

The present disclosure relates to a network node, a user equipment, and a communication method used in a mobile communication system.

### BACKGROUND OF INVENTION

In technical specifications of 5G (5th Generation)/NR (New Radio) of the 3rd Generation Partnership Project (3GPP (registered trademark; the same applies hereinafter)), radio waves in higher frequency bands are used for wireless communication as compared with 4G (4th Generation)/LTE (Long Term Evolution). Since the propagation loss increases in a high frequency band, beamforming for narrowing a direction in which radio waves are transmitted is used for wireless communication, and the propagation loss is compensated for by a beam gain.

A network node (for example, a base station) configured to manage a cell transmits a Synchronization Signal /Physical Broadcast channel block (SSB) used for a cell search performed by a user equipment through beamforming. The cell search is a procedure in which the user equipment acquires time and frequency synchronization with a cell and detects a cell ID of the cell. The user equipment performs a cell search on the basis of the primary synchronization signal, the secondary synchronization signal, and the demodulation reference signal (DMRS) of the PBCH in the SSB.

In order to transmit the SSB to the entire coverage area of the cell, the network node performs beam sweeping that switches the transmission beam direction (also referred to as "beamforming pattern") of the SSB at a predetermined time interval. For example, the network node transmits an SS burst (also referred to as an "SS burst set" or a "synchronization signal burst") including a plurality of SSBs arranged in the time direction in a period of 20 [ms]. Here, the network node transmits each SSB in the SS burst in a time-division manner in different transmission beam directions through beam sweeping. This allows the SSB to cover the entire cell coverage area within an SS burst even when transmitting the SSB through beamforming. Meanwhile, the SS burst is specified to be set within a predetermined time length (specifically, the time of a half frame).

As the frequency band becomes higher, beamforming capable of forming a sharper beam is used, and thus the number of SSBs within an SS burst tends to increase. For example, in frequency range (FR) 1 equivalent to the Sub6 band, a maximum of eight SSBs (that is, SSB beamforming patterns in a maximum of eight directions) can be used within an SS burst, and in FR2 equivalent to the millimeter-wave band, a maximum of 64 SSBs (that is, SSB beamforming patterns in a maximum of 64 directions) can be used within an SS burst.

### CITATION LIST

### NON-PATENT LITERATURE

Non-Patent Document 1: 3GPP technical specifications: 3GPP TS 38.300 V17.6.0 (2023-09)

### SUMMARY

In 6G (6th Generation), the use of the sub-terahertz band (for example, the frequency range of 90 GHz to 300 GHz), which is a higher frequency band than the millimeter-wave band, is being primarily studied. In the sub-terahertz band, it is assumed that the number of SSBs within an SS burst will increase further. As a result, the time required for the network node to cause the SSB to cover the entire cell, that is, the time required for beam sweeping, may increase. Similarly, there is concern that the time required for a cell search performed by the user equipment will also increase.

The present disclosure provides a network node, a user equipment, and a communication method that make it possible to suppress an increase in the time required for beam sweeping and cell search, even when a higher frequency band is used in a mobile communication system.

A network node according to a first aspect is a network node configured to manage a cell in a mobile communication system and includes: a transmitter configured to transmit a synchronization signal block used for a cell search performed by a user equipment through beamforming; and a controller configured to perform beam sweeping that switches a transmission beam direction of the synchronization signal block at a predetermined time interval. The controller controls the transmitter to simultaneously transmit N (N is an integer of 2 or greater) of the synchronization signal blocks at different frequencies within a band of the cell.

A user equipment according to a second aspect is a user equipment configured to perform wireless communication with a network node configured to manage a cell in a mobile communication system and includes: a receiver configured to receive a synchronization signal block which is transmitted from the network node through beamforming and to which beam sweeping that switches a transmission beam direction at a predetermined time interval is applied; and a controller configured to perform a cell search on the basis of the synchronization signal block. The receiver receives at least one of N (N is an integer of 2 or greater) of the synchronization signal blocks which are transmitted simultaneously at different frequencies within a band of the cell.

A communication method according to a third aspect is a communication method used by a network node configured to manage a cell in a mobile communication system and includes: transmitting a synchronization signal block used for a cell search performed by a user equipment through beamforming; and performing beam sweeping that switches a transmission beam direction of the synchronization signal block at a predetermined time interval. The transmitting a synchronization signal block includes simultaneously transmitting N (N is an integer of 2 or greater) of the synchronization signal blocks at different frequencies within a band of the cell.

A communication method according to a fourth aspect is a communication method used by a user equipment configured to perform wireless communication with a network node configured to manage a cell in a mobile communication system and includes: receiving a synchronization signal block which is transmitted from the network node through beamforming and to which beam sweeping that switches a transmission beam direction at a predetermined time interval is applied; and performing a cell search on the basis of the synchronization signal block. The receiving a synchronization signal block includes receiving at least one of N (N is an integer of 2 or greater) of the synchronization signal blocks transmitted simultaneously at different frequencies within a band of the cell.

### BRIEF DESCRIPTION OF THE DRAWINGS

FIG. 1 is a diagram illustrating a configuration example of a mobile communication system according to an embodiment.
FIG. 2 is a diagram illustrating a configuration example of a protocol stack of a U-plane radio interface that handles data.
FIG. 3 is a diagram illustrating a configuration example of a protocol stack of a C-plane radio interface that handles signaling (control signal).
FIG. 4 is a diagram illustrating an overview of SSB, beam sweeping, and cell search according to the embodiment.
FIG. 5 is a diagram illustrating an overview of SSB, beam sweeping, and cell search according to the embodiment.
FIG. 6 is a diagram illustrating a configuration example of a base station (network node) according to the embodiment.
FIG. 7 is a diagram illustrating an example of beam sweeping.
FIG. 8 is a diagram illustrating a comparative example.
FIG. 9 is a diagram illustrating an example of an SSB transmission operation according to the embodiment.
FIG. 10 is a diagram illustrating an example of the SSB transmission operation according to the embodiment.
FIG. 11 is a diagram illustrating another example of the SSB transmission operation according to the embodiment.
FIG. 12 is a diagram illustrating OffsetToPointA and Kssb (ssb-SubcarrierOffset).
FIG. 13 is a diagram illustrating a configuration example of a user equipment (UE) according to the embodiment.
FIG. 14 is a diagram illustrating an operation example of a base station (network node) according to the embodiment.
FIG. 15 is a diagram illustrating an operation example of the user equipment (UE) according to the embodiment.

### DESCRIPTION OF EMBODIMENTS

A mobile communication system according to embodiments will be described below with reference to the drawings. In the description of the drawings, the same or similar parts are denoted by the same or similar reference signs.

### (1) System Configuration Example

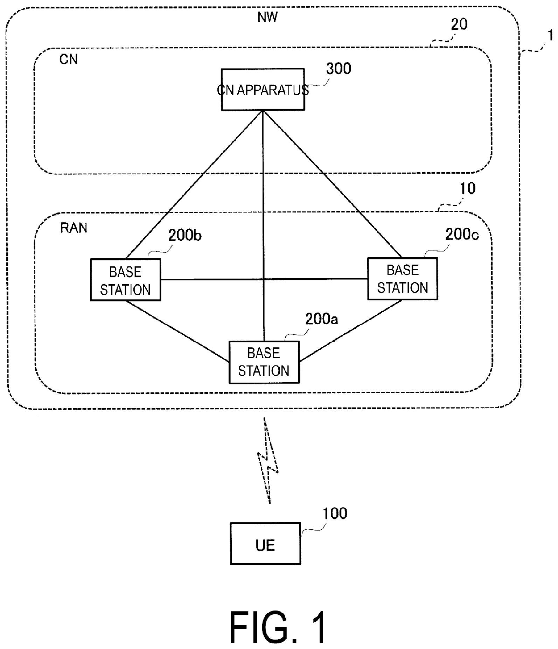

FIG. 1 is a diagram illustrating a configuration example of a mobile communication system according to an embodiment. The mobile communication system according to the present embodiment is a system conforming to the 3GPP standard. For example, the mobile communication system according to the embodiment may be a 5th generation (5G) system or a 6th generation (6G) system.

The mobile communication system includes a network (NW) 1 and a user equipment (UE) 100. The UE 100 is a mobile communication apparatus and performs wireless communication with the NW 1. The UE 100 may be an apparatus used by a user and may be, for example, a mobile phone terminal (including a smartphone), a tablet terminal, a laptop personal computer (PC), a communication module (including a communication card or chipset), a sensor or an apparatus provided in a sensor, a vehicle or an apparatus provided in a vehicle (a vehicle UE), or an aircraft or an apparatus provided in an aircraft (an aerial UE).

The NW 1 includes a Radio Access Network (RAN) 10 and a Core Network (CN) 20. When the mobile communication system is a 5th Generation System (5GS), the RAN 10 is referred to as a Next Generation Radio Access Network (NG-RAN) and the CN 20 is referred to as a 5G Core Network (5GC).

The RAN 10 includes a plurality of base stations 200 (in the illustrated example, base stations 200a to 200c). The base stations 200 are interconnected to each other through interbase station interfaces. The base station 200 is an example of a network node. The base station 200 may be composed of (that is, functionally divided into) a central unit (CU) and a distributed unit (DU), and both units may be connected to each other through a fronthaul interface. When the mobile communication system is 5GS, the base station 200 is referred to as a gNB, the interbase station interface is referred to as an Xn interface, and the fronthaul interface is referred to as an F1 interface.

Each of the base stations 200 manages one or a plurality of cells. The base station 200 performs wireless communication with the UE 100, which has established a connection with its own cell. Each of the base stations 200 has a radio resource management (RRM) function, a routing function for user data (also simply referred to as "data"), a measurement control function for mobility control and scheduling, and the like. Note that a "cell" is used as a term indicating a minimum unit of a wireless communication area. The "cell" is also used as a term representing a function or a resource for performing wireless communication with the UE 100. One cell belongs to one carrier frequency. One cell may be associated with one downlink component carrier and one uplink component carrier. The bandwidth corresponding to one cell (system bandwidth) may be divided into a plurality of bandwidth parts (BWPs).

The CN 20 includes a CN apparatus 300. The CN apparatus 300 may include a control plane (C-plane) apparatus associated with the C-plane, and a user plane (U-plane) apparatus associated with the U-plane. The C-plane apparatus performs various mobility control, paging, and the like for the UE 100. The C-plane apparatus communicates with the UE 100 using Non-Access Stratum (NAS) signaling. The U-plane apparatus controls data transfer. When the mobile communication system is a 5GS, the C-plane device is referred to as an Access and Mobility Management Function (AMF), the U-plane device is referred to as a User Plane Function (UPF), and the interface between the node 200 and the CN device 300 is referred to as an NG interface.

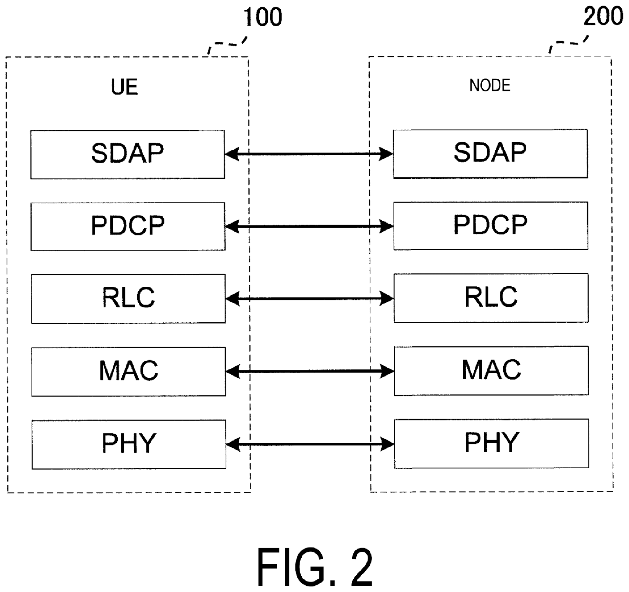

FIG. 2 is a diagram illustrating a configuration example of a protocol stack of a U-plane radio interface that handles data.

The protocol of the U-plane radio interface includes, for example, a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the base station 200 through a physical channel. Meanwhile, the PHY layer of the UE 100 receives downlink control information (DCI) transmitted from the base station 200 on a physical downlink control channel (PDCCH). Specifically, the UE 100 performs blind decoding of the PDCCH by using a radio network temporary identifier (RNTI) and acquires a successfully decoded DCI as a DCI addressed to the UE. The DCI transmitted from the base station 200 has CRC parity bits scrambled by the RNTI added thereto.

The MAC layer performs data priority control and retransmission processing using Hybrid ARQ (HARQ), and the like. Data and control information are transmitted between the MAC layer of the UE 100 and the MAC layer of the base station 200 through a transport channel. The MAC layer of the base station 200 includes a scheduler. The scheduler determines the uplink and downlink transport format (a transport block size and a Modulation and Coding Scheme (MCS)) and the resources to be allocated to the UE 100.

The RLC layer transmits data to the RLC layer on the reception side by using functions of the MAC layer and the PHY layer. Data and control information are transmitted between the RLC layer of the UE 100 and the RLC layer of the base station 200 through a logical channel.

The PDCP layer performs header compression/decompression, encryption/decryption, and the like.

The SDAP layer performs mapping between an IP flow, which is a unit for QoS control by the CN 20, and a radio bearer, which is a unit for QoS control by an Access Stratum (AS). Meanwhile, when the CN 30 performs QoS control in the same unit as the RAN 20 (that is, when QoS control is performed not in the unit of IP flows but in the unit of bearers, and one-to-one mapping with radio bearers is possible), the SRAP layer may not be provided.

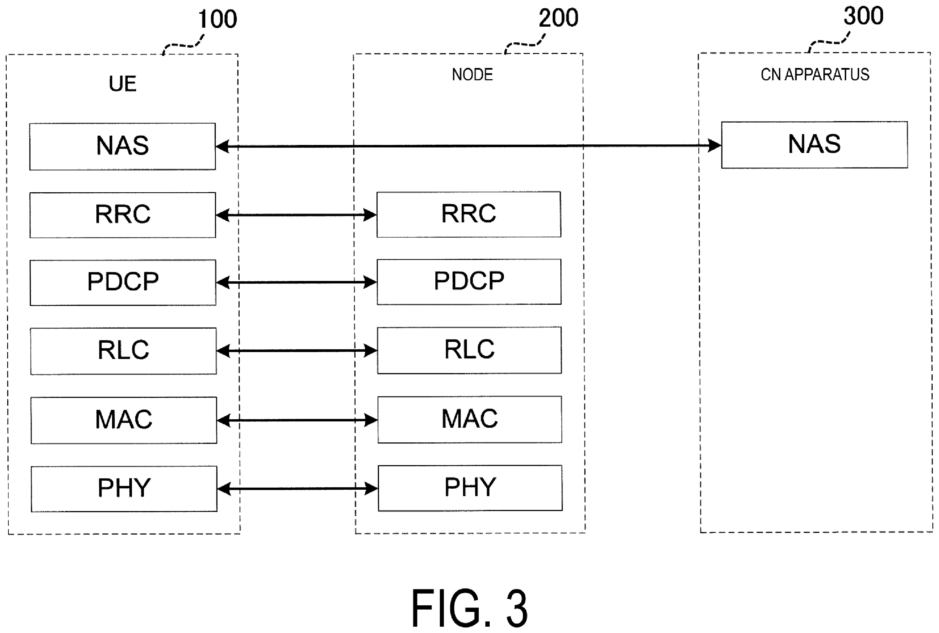

FIG. 3 is a diagram illustrating a configuration example of a protocol stack of a C-plane radio interface that handles signaling (control signal).

The protocol stack of the C-plane radio interface includes, for example, a Radio Resource Control (RRC) layer and a Non-Access Stratum (NAS) layer instead of the SDAP layer illustrated in FIG. 2.

RRC signaling for various settings is transmitted between the RRC layer of the UE 100 and the RRC layer of the base station 200. The RRC layer controls a logical channel, a transport channel, and a physical channel according to establishment, re-establishment, and release of a radio bearer. When connection (RRC connection) is established between the RRC of the UE 100 and the RRC of the base station 200, the UE 100 is in an RRC connected stated. When connection (RRC connection) is not established between the RRC of the UE 100 and the RRC of the base station 200, the UE 100 is in an RRC idle state. When the connection between the RRC of the UE 100 and the RRC of the base station 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of the CN apparatus 300. The UE 100 includes an application layer other than the protocol of the radio interface. The layer below the NAS layer is referred to as an AS layer (also simply referred to as "AS").

### (2) Overview of SSB, Beam Sweeping, and Cell Search

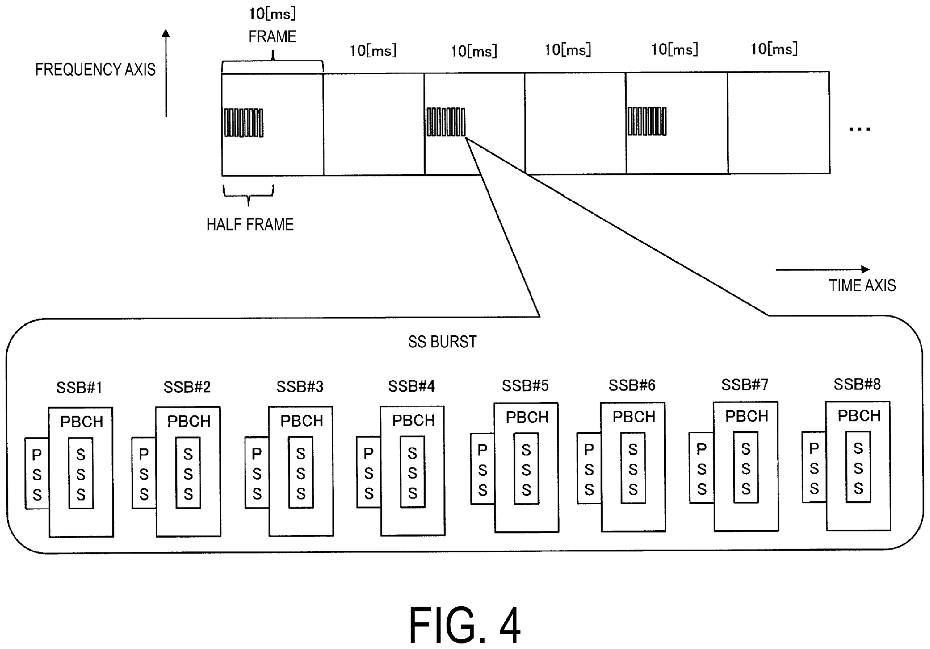

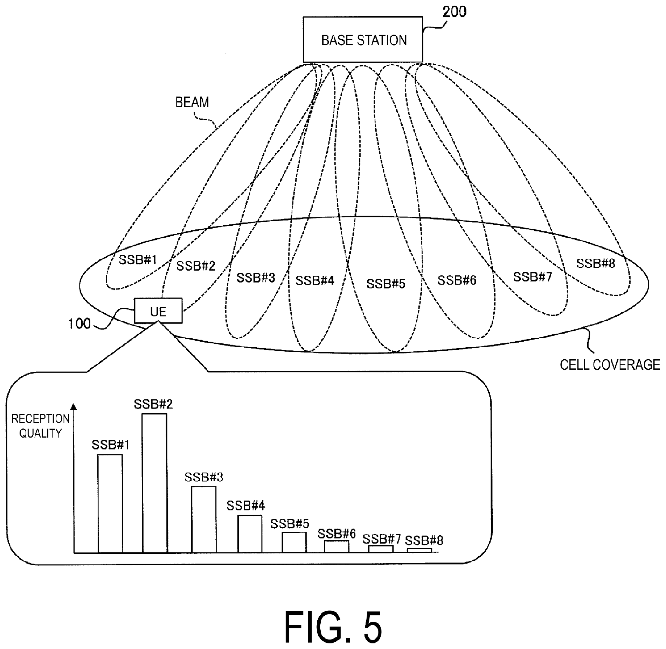

FIGs. 4 and 5 are diagrams illustrating an overview of SSB, beam sweeping, and cell search according to the present embodiment.

As shown in FIG. 4, in the frame structure used for 5G/NR wireless communication, one frame (radio frame) is 10 [ms] in the time-axis direction. The frame is constituted by 10 sub-frames each having a length of 1 [ms]. Each sub-frame is constituted by a number of slots corresponding to the waveform configuration (also referred to as "Numerology") such as the subcarrier interval. Specifically, as the subcarrier interval increases, the length of the slot in the time-axis direction decreases. The number of symbols on one slot is 14 in the case of a normal cyclic prefix (CP). On the other hand, in the frequency-axis direction, one resource block (RB) is constituted by 12 subcarriers. One resource element (RE) is constituted by one symbol and one subcarrier.

The base station 200 configured to manage the cell transmits an SSB (SS/PBCH block) used for a cell search performed by the UE 100. Each SSB is composed of four symbols in the time-axis direction, and is composed of 240 consecutive subcarriers (that is, 20 RBs) in the frequency-axis direction. These subcarriers are numbered in ascending order from 0 to 239 within the SSB, from the lower frequency side to the higher frequency side. The subcarrier on the lowest frequency side within the SSB is also referred to as subcarrier 0. Meanwhile, each of the PSS and SSS consists of one symbol and 127 subcarriers. The PBCH consists of three symbols and 240 subcarriers.

Each SSB includes a synchronization signal (SS) and a physical broadcast channel (PBCH). The SS includes a primary synchronization signal (PSS) and a secondary synchronization signal (SSS). The PSS and SSS are used for synchronization in at least the time-axis direction. The combination of signal sequences of the PSS and SSS indicates the cell ID (PCI: Physical Cell ID) of a transmission source cell. The PBCH includes a master information block (MIB) and a demodulation reference signal (DMRS). The MIB includes parameters for decoding system information block type 1 (SIB1). The DMRS is a reference signal for decoding the PBCH. Meanwhile, the SIB1 is also referred to as remaining minimum system information (RMSI). The SSB associated with the SIB1 (RMSI) is referred to as a cell defining SSB (CD-SSB). In the following, the SSB refers to CD-SSB.

The SSB is continuously placed in the time direction at a specific frequency within a band of the cell. Specifically, under the current technical specifications of 3GPP, an SSB is placed at a single frequency predetermined at the base station 200 side, and the SSB is transmitted repeatedly in the time-axis direction. The position of the SSB on the frequency axis can be notified from the base station 200 to the UE 100 through RRC signaling.

The base station 200 periodically transmits an SS burst (also referred to as an "SS burst set" or "synchronization signal burst") consisting of a plurality of SSBs arranged in the time direction. The transmission period for the SS burst can be selected from 5 [ms], 10 [ms], 20 [ms], 40 [ms], 80 [ms], and 160 [ms], but 20 [ms] is the most common. The maximum number of SSBs within one SS burst, that is, the maximum number of consecutive SSBs, is 8 in FR1 equivalent to the Sub6 band, and 64 in FR2 equivalent to the millimeter-wave band. In the example shown in FIG. 4, the transmission period of the SS burst is 20 [ms], and the number of SSBs within the SS burst is 8. Meanwhile, the SS burst is specified to be set within half a frame (5 [ms]). The time position at which the SSB can be placed within a half frame is determined in accordance with the subcarrier interval. On the other hand, the transmission period of the SS burst (that is, the periodicity of the half frame in which the SSB is transmitted) is set by the NW 1 (base station 200).

Although the example in FIG. 4 shows a case where all SSBs within the SS burst are transmitted, the base station 200 does not necessarily need to transmit all SSBs within the SS burst. The base station 200 can selectively transmit only some SSBs within the SS burst in accordance with the requirement of the NW 1. The base station 200 can notify the UE 100 of which SSB is transmitted and which SSB is not transmitted within the SS burst through RRC signaling. Specifically, the UE 100 is notified of this transmission pattern by an RRC information element (IE) referred to as ssb-PositionInBurst.

The base station 200 assigns an SSB index, which is an identifier of the SSB, to each SSB within the SS burst. In the example in FIG. 4, "#1" to "#8" represent SSB indexes. This number is reset to 1 in the next SS burst. The SSB index may be a unique number that starts from 0 and increases by 1. When the SSB index starts from 0, the SSB index is reset to 0 in the next SS burst. The base station 200 notifies the UE 100 of the SSB index using the PBCH in the SSB. The UE 100 that has received the SSB can determine the SSB index of the SSB on the basis of the PBCH in the received SSB.

As shown in FIG. 5, in order to transmit an SSB to the entire coverage area of the cell, the base station 200 performs beam sweeping that switches the transmission beam direction of the SSB (also referred to as "beamforming pattern (BF pattern)") at a predetermined time interval within the period of each SS burst (SS burst period). That is, the base station 200 transmits each SSB within the SS burst in a time-division manner in different transmission beam directions through beam sweeping. Therefore, within a half frame, different SSBs are transmitted in different spatial directions (that is, different transmission beam directions) so as to span the coverage area of the cell. This allows the SSB to cover the entire cell coverage area (cell coverage) within an SS burst even when transmitting SSB using beamforming.

The UE 100 performs cell search on the basis of the SSB (specifically, the PSS, SSS, and DMRS within the SSB). The cell search is a procedure in which the UE 100 acquires time and frequency synchronization with a cell and detects the cell ID of the cell. The UE 100 performs scanning (cell search) of the SSB on a synchronous raster which is a position on the frequency axis where the SSB can be placed. The UE 100 measures the reception quality of each received SSB and specifies an appropriate beam by determining the SSB index of the SSB whose reception quality satisfies a predetermined condition. Here, the reception quality may be reference signal received power (RSRP) in the SSB. The predetermined condition may be a condition that the reception quality exceeds a threshold. The predetermined condition may be a condition that the reception quality is the highest among SSBs received within a predetermined period (for example, an SS burst period). In the example shown in FIG. 5, since SSB #2 has the highest reception quality, the UE 100 can determine SSB #2 as an SSB whose reception quality satisfies the predetermined condition.

The UE 100 performs random access (RA) for initial access to the NW 1 (base station 200). Specifically, the UE 100 transmits an RA preamble to the base station 200 in order to perform RA. RA occasions, which are timings at which an RA preamble can be transmitted, are prepared according to the number of transmission beams of the base station 200 (that is, the number of SSBs within the SS burst). The UE 100 transmits the RA preamble to the base station 200 in an RA occasion corresponding to the SSB (SSB index) whose reception quality satisfies a predetermined condition. The base station 200 that has received the RA preamble can ascertain a transmission beam (that is, a direction in which the UE 100 is located) preferred for the UE 100 on the basis of a correspondence relation between the beam (SSB index) and the RA occasion.

Meanwhile, the UE 100 is notified of the RA occasion in the system information provided by the base station 200. Specifically, the base station 200 notifies the UE 100 of the time and frequency resources for the RA occasion. The SSB and the RA occasion have a one-to-one relationship. The base station 200 that directs a transmission beam in a certain direction performs reception using a reception beam directed in the same direction as the transmission beam when performing reception in an RA occasion corresponding to the SSB.

In the mobile communication system 1, beam sweeping and cell search are performed in this way. Here, beamforming is used, which can form a sharper beam as the frequency band becomes higher. While the use of the sub-terahertz band (for example, the frequency range of 90 GHz to 300 GHz) is being primarily considered for 6G, it is assumed that the number of SSBs within an SSB burst will increase further in the sub-terahertz band. Therefore, the time required for base station 200 to cause the SSB to cover the entire cell, that is, the time required for beam sweeping, may increase. Similarly, the time required for cell search performed by the UE 100 may also increase.

### (3) Configuration Example of Base Station

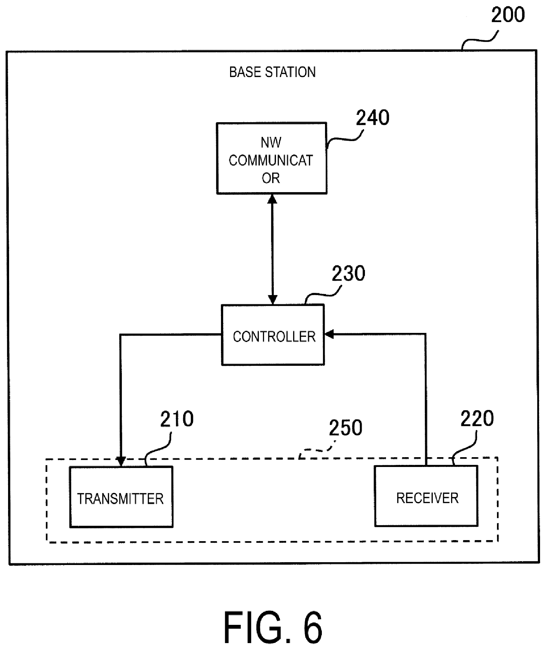

FIG. 6 is a diagram illustrating a configuration example of the base station 200 (network node) according to the present embodiment. The base station 200 according to the present embodiment may be configured to perform wireless communication in the sub-terahertz band.

The base station 200 includes a transmitter 210, a receiver 220, a controller 230, and a NW communicator 240. The transmitter 210 and the receiver 220 constitute a wireless communicator 250 that performs wireless communication with the UE 100.

The transmitter 210 performs various transmissions under the control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

In order to compensate for the propagation loss at a high frequency, the wireless communicator 250 needs to perform beamforming for narrowing the direction in which radio waves are transmitted by giving directivity to the antenna. In order to control the directivity of the antenna, in the case of digital beamforming, it is necessary to have the same number of antenna weights as the number of antenna elements in the digital domain. The antenna weight is a weight for controlling the amplitude and the phase. However, when the control is performed in the digital region, the digital circuit becomes large. Therefore, a phase shifter, which is an antenna weight capable of controlling only the phase, is generally used in the analog domain. The antenna weight in the digital domain is realized in the frequency domain when the OFDM modulation scheme is used, that is, before the inverse fast Fourier transform (IFFT) at the time of transmission. During reception, it is realized after a fast Fourier transform (FFT). Therefore, when the antenna weight in the digital domain is realized in the frequency domain, it is possible to direct beams in different directions using resources of different frequencies even at the same time. On the other hand, since the antenna weight realized in the analog domain is always controlled in the time domain, the beam can be directed only in the same direction over all the frequency domains at the same time. Usually, one antenna panel cannot form beams in different directions using different frequencies at the same time. However, when two antenna panels are used, beams in different directions can be formed even at the same time. Therefore, in the present embodiment, the wireless communicator 250 may include N (N is an integer of 2 or greater) antenna panels.

The controller 230 performs various types of control and processing in the base station 200. The operation of the base station 200 described above and below may also be performed under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The NW communicator 240 is connected to an adjacent base station through the interbase station interface. The NW communicator 240 is connected to the CN device 300 through the base station-CN interface.

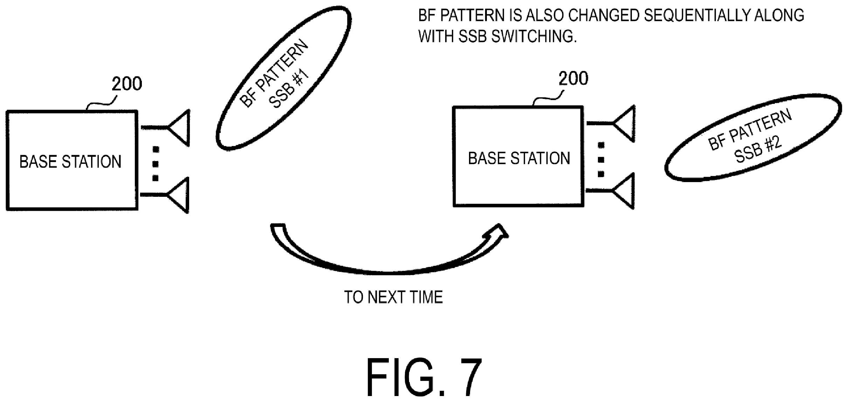

The base station 200 configured in this way manages cells in the mobile communication system. The transmitter 210 transmits an SSB used for a cell search performed by the UE 100 through beamforming. The controller 230 performs beam sweeping that switches the transmission beam direction (that is, the BF pattern) of the SSB at a predetermined time interval. FIG. 7 is a diagram illustrating an example of beam sweeping. The base station 200 holds a plurality of BF patterns. The base station 200 transmits SSBs sequentially while switching the BF pattern. In the example shown in FIG. 7, the base station 200 transmits SSB #1 in a certain BF pattern during the SS burst period within a half frame, and then transmits SSB #2 in another BF pattern. For example, a BF pattern of 30° to the left as seen from the base station 200 is transmitted through SSB #1, and then a BF pattern of 10° to the left as seen from the base station 200 is transmitted through SSB #2. In this way, the BF pattern and SSB are transmitted with a one-to-one correspondence. Meanwhile, the positions where the SSBs can be placed in the time-axis direction within the SS burst period may be determined in accordance with the subcarrier interval. That is, the predetermined time interval for switching the BF pattern may be determined in accordance with the subcarrier interval.

In the present embodiment, the controller 230 controls the transmitter 210 to simultaneously transmit N SSBs (N is an integer of 2 or greater) at different frequencies within a band of the cell (its own cell). In particular, the controller 230 controls the transmitter 210 to simultaneously transmit N SSBs within a band of the cell at different frequencies and in different transmission beam directions (different BF patterns). In the sub-terahertz band, the number of SSBs within the SS burst is expected to increase further, but by simultaneously transmitting N SSBs (N is an integer of 2 or greater) at different frequencies (that is, N frequencies) within a band of its own cell, the time required for beam sweeping can be shortened to 1/N compared to a case where the SSB is transmitted at one frequency within a band of its own cell.

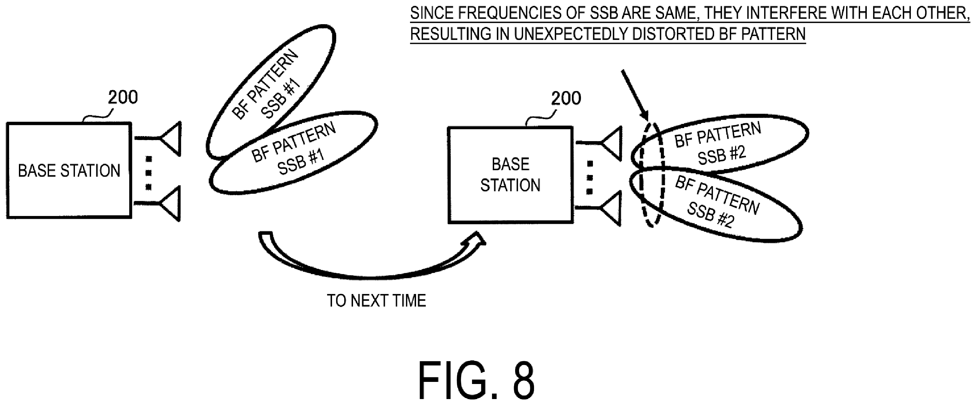

Here, as a comparative example, a case where a plurality of SSBs are transmitted at the same frequency is assumed. FIG. 8 is a diagram illustrating a comparative example. In the comparative example shown in FIG. 8, a plurality of BF patterns are applied simultaneously to one SSB within a band of its own cell, and thus beam sweeping is completed earlier by that amount. However, when signals (in this case, SSBs) of the same time and the same frequency are transmitted with a plurality of BF patterns, the BF patterns interfere with each other in complex ways, resulting in a distorted beam different from the originally designed BF pattern, which leads to unexpected beam sweeping.

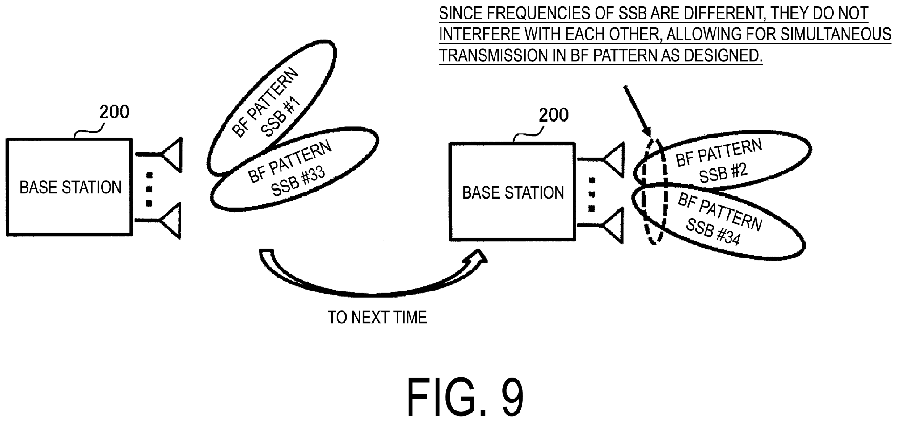

In contrast, the base station 200 according to the present embodiment can multiplex different SSBs by frequency division and suppress the occurrence of interference between BF patterns by simultaneously transmitting N SSBs at different frequencies (N frequencies) within a band of its own cell. Therefore, beam sweeping using the originally designed BF pattern is possible. FIG. 9 is a diagram illustrating an example of an SSB transmission operation according to the present embodiment. In the following, an example where N=2 will be mainly described, N may be an integer of 3 or greater. In the example shown in FIG. 9, first, the base station 200 transmits SSB #1 in a first BF pattern, and transmits SSB #33 in a second BF pattern which is spatially continuous with the first BF pattern. Here, the transmission frequency of SSB #1 and the transmission frequency of SSB #33 are different from each other. Next, the base station 200 transmits SSB #2 in a third BF pattern which is spatially continuous with the second BF pattern, and transmits SSB #34 in a fourth BF pattern which is spatially continuous with the third BF pattern. Here, the transmission frequency of SSB #2 and the transmission frequency of SSB #34 are different from each other. Specifically, the transmission frequency of SSB #2 is the same as the transmission frequency of SSB #1, and the transmission frequency of SSB #34 is the same as the transmission frequency of SSB #33.

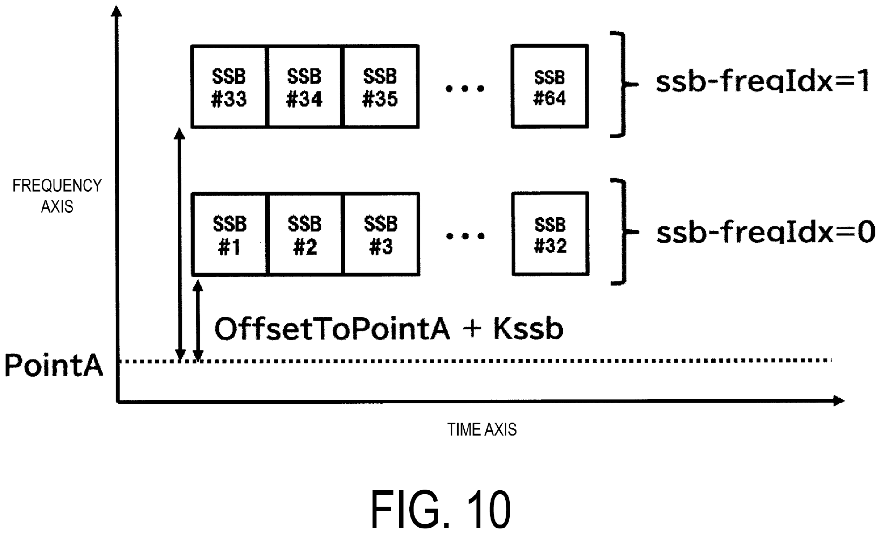

FIG. 10 is a diagram illustrating an example of an SSB transmission operation according to the present embodiment. The transmitter 210 of the base station 200 according to the present embodiment transmits a first SSB group at a first frequency within a band of the cell and transmits a second SSB group at a second frequency within a band of the cell during a SS burst period that occurs periodically. In the example shown in FIG. 10, the first SSB group consists of SSB #1 to SSB #32, and the second SSB group consists of SSB #33 to SSB #64. Therefore, a total of 64 SSBs are transmitted within one SS burst period. By transmitting two SSB groups in parallel at two frequencies, the time required for SSB transmission can be shortened to 1/2 compared to a case where 64 SSBs are transmitted at one frequency.

The controller 230 of the base station 200 according to the present embodiment controls beam sweeping so that, within each SS burst period, the first SSB group covers a first portion of the coverage area of the cell and the second SSB group covers a second portion of the coverage area. That is, the controller 230 makes the area covered by the first SSB group and the area covered by the second SSB group different within the coverage area of its own cell. This makes it possible to realize efficient beam sweeping.

In the example shown in FIG. 10, the controller 230 assigns an SSB index to each SSB so that the SSB index of the first SSB group (SSB #1 to SSB #32) and the SSB index of the second SSB group do not duplicate each other. This allows the SSB index to uniquely determine SSBs within the SS burst period. Although "#1" to "#64" represent SSB indexes, the SSB indexes may be unique numbers that starts from 0 and increases by 1 over time. This number is reset to 0 in the next SS burst. The base station 200 notifies the UE 100 of the SSB index using the PBCH in the SSB. The UE 100 that has received the SSB can determine the SSB index of the received SSB on the basis of the PBCH in the received SSB.

The controller 230 may assign different frequency indexes (ssb-freqIdx) to the SSBs of the first SSB group and the SSBs of the second SSB group. Here, ssb-freqIdx may be a unique number that starts from 0 and increases by 1 from the low frequency side to the high frequency side. The base station 200 may notify the UE 100 of ssb-freqIdx using the PBCH in the SSB. The UE 100 that has received the SSB can determine ssb-freqIdx of the received SSB (that is, which frequency position the received SSB corresponds to from the lowest frequency) on the basis of the PBCH in the received SSB.

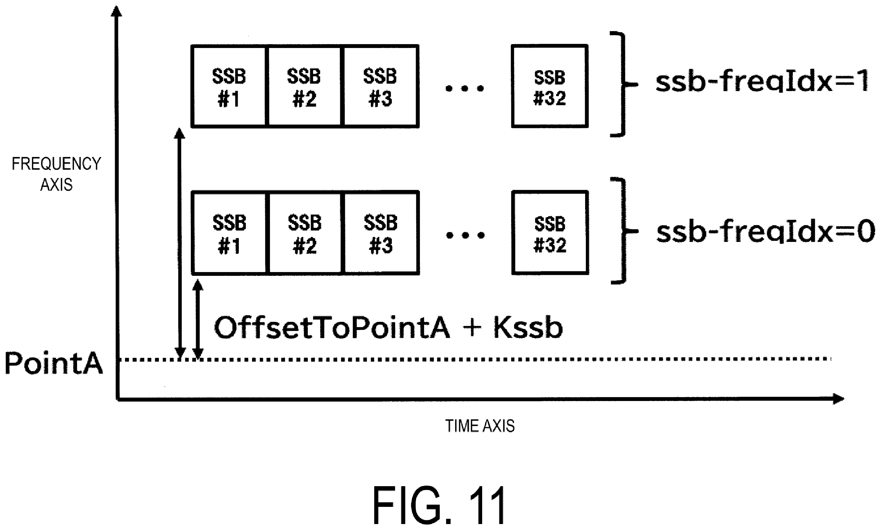

Alternatively, the controller 230 may assign an identifier to the SSB so that an identifier of the SSBs in the first SSB group and an identifier of the SSBs in the second SSB group at least partially duplicate each other. In this case, the controller 230 assigns different frequency indexes (ssb-freqIdx) to the SSBs of the first SSB group and the SSBs of the second SSB group. FIG. 11 is a diagram illustrating another example of the SSB transmission operation according to the present embodiment. In the example shown in FIG. 11, the first SSB group consists of SSB #1 to SSB #32 where ssb-freqIdx = 0, and the second SSB group consists of SSB #1 to SSB #32 where ssb-freqIdx = 1. That is, the SSB index is common to the first SSB group and the second SSB group. The base station 200 notifies the UE 100 of the SSB index and ssb-freqIdx using the PBCH in the SSB. The UE 100 that has received the SSB can determine the SSB index and ssb-freqIdx of the received SSB on the basis of the PBCH in the received SSB.

The transmitter 210 of the base station 200 according to the present embodiment transmits N pieces of setting information, each indicating the parameters of a respective one of N of the SSBs transmitted simultaneously at different frequencies. For example, the controller 230 generates N pieces of setting information, and the transmitter 210 transmits the N pieces of setting information to the UE 100 using the PBCH (MIB), SIB, or RRC message (for example, an RRC Reconfiguration message).

Each of the N pieces of setting information may be at least one piece of information (setting parameters) of the following 1) to 3).

### 1) OffsetToPointA

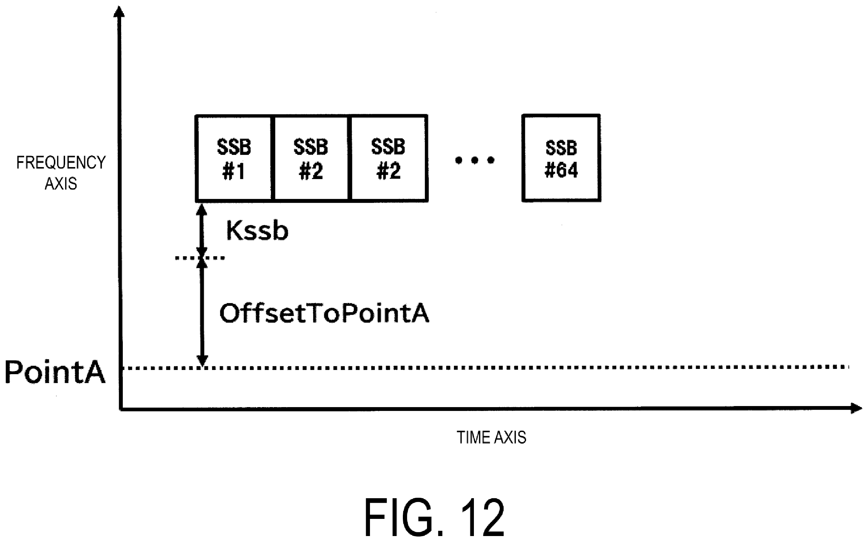

As shown in FIG. 12, OffsetToPointA is information indicating a frequency offset between the lowest-frequency subcarrier (subcarrier 0) of the corresponding SSB and the reference point (referred to as "PointA") of the resource block grid in units of resource blocks.

The base station 200 may notify (set) the UE 100 of N OffsetToPointA in the SIB1. For example, the base station 200 includes OffsetToPointA of each of the N SSBs which are transmitted simultaneously at different frequencies within the cell, in the SIB1 that broadcasts in its own cell.

The SIB1 includes FrequencyInfoDL-SIB, which is an IE that provides basic parameters for the downlink carrier and transmission on the downlink carrier. In the present embodiment, FrequencyInfoDL-SIB may include N OffsetToPointA. In FrequencyInfoDL-SIB, each of N OffsetToPointA may be associated with ssb-freqIdx. For example, N OffsetToPointA may be provided in a list format, and the order of OffsetToPointA in the list (that is, the position of the entry) may indicate ssb-freqIdx. Alternatively, FrequencyInfoDL-SIB may include N sets of OffsetToPointA and ssb-freqIdx.

### 2) Kssb (ssb-SubcarrierOffset)

As shown in FIG. 12, Kssb (ssb-SubcarrierOffset) is information indicating a frequency offset between the lowest-frequency subcarrier (subcarrier 0) of the corresponding SSB and the low-frequency boundary of the resource block to which the subcarrier (subcarrier 0) belongs, in units of subcarriers. Accordingly, the UE 100 can calculate the reference point (PointA) of the resource block grid by subtracting the sum of Kssb (ssb-SubcarrierOffset) and OffsetToPointA from the subcarrier 0.

The base station 200 may notify (set) the UE 100 of N pieces of Kssb (ssb-SubcarrierOffset). For example, the base station 200 includes, in the MIB that broadcasts in its own cell, Kssb (ssb-SubcarrierOffset) of each of the N SSBs which are transmitted simultaneously at different frequencies within the cell.

As described above, in the present embodiment, the MIB may include N pieces of OffsetToPointA. In the MIB, each of N pieces of Kssb (ssb-SubcarrierOffset) may be associated with ssb-freqIdx. For example, N pieces of Kssb (ssb-SubcarrierOffset) may be provided in a list format, and the order of Kssb (ssb-SubcarrierOffset) in the list (that is, the position of the entry) may indicate ssb-freqIdx. Alternatively, the MIB may include N sets of Kssb (ssb-SubcarrierOffset) and ssb-freqIdx.

### 3) absoluteFrequencySSB

Here, absoluteFrequencySSB is information (ARFCN: Absolute Radio-Frequency Channel Number) indicating the frequency of the corresponding SSB. The frequency indicated by absoluteFrequencySSB may be the position of the resource element RE = #0 of the resource block RB #10 of the SSB.

For example, when the secondary cell (SCell) is set in the UE 100, the base station 200 notifies (sets) the UE 100 of N pieces of absoluteFrequencySSB for the secondary cell using an RRC Reconfiguration message. As described above, in the present embodiment, the RRC Reconfiguration message may include N pieces of absoluteFrequencySSB. In the RRC Reconfiguration message, each of N pieces of absoluteFrequencySSB may be associated with ssb-freqIdx. For example, N pieces of absoluteFrequencySSB may be provided in a list format, and the order of absoluteFrequencySSB in the list (that is, the position of the entry) may indicate ssb-freqIdx. Alternatively, the RRC Reconfiguration message may include N sets of absoluteFrequencySSB and ssb-freqIdx.

### (4) Configuration Example of User Equipment

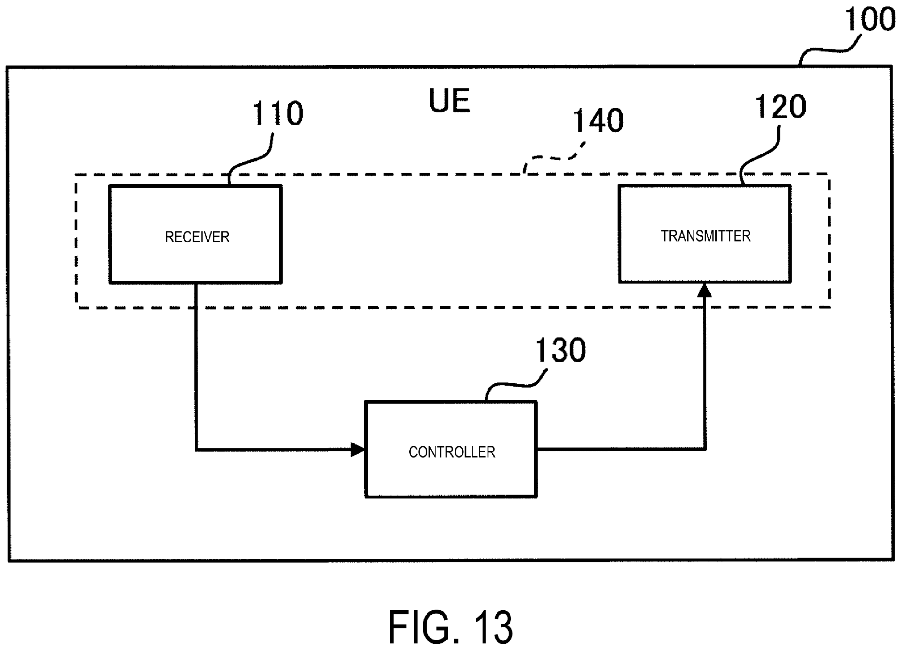

FIG. 13 is a diagram illustrating a configuration example of the UE 100 (user equipment) according to the present embodiment. The UE 100 according to the present embodiment may be configured to perform wireless communication in the sub-terahertz band.

The UE 100 includes a receiver 110, a transmitter 120, and a controller 130. The receiver 110 and the transmitter 120 constitute a wireless communicator 140 that performs wireless communication with the base station 200.

The receiver 110 performs various receptions under the control of the controller 130. The receiver 110 includes an antenna and a reception device. The reception device converts a radio signal received through the antenna into a baseband signal (a reception signal) and outputs the resulting signal to the controller 130. The transmitter 120 performs various transmissions under the control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various controls and processes in the UE 100. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

The UE 100 configured in this way performs wireless communication with the base station 200 configured to manage the cell in the mobile communication system. The receiver 110 receives an SSB which is transmitted from the base station 200 through beamforming and to which beam sweeping that switches a transmission beam direction at a predetermined time interval is applied. In the present embodiment, the receiver 110 receives at least one of N SSBs which are transmitted simultaneously at different frequencies within a band of the cell. The controller 130 performs a cell search on the basis of the SSB received by the receiver 110.

In the present embodiment, the receiver 110 receives at least one of N SSBs which are transmitted simultaneously within a band of the cell at different frequencies and in different transmission beam directions (different BF patterns). During the SS burst period that periodically occurs, the receiver 110 receives the first SSB group at the first frequency within a band of the cell and receives the second SSB group at the second frequency within a band of the cell.

In the present embodiment, the receiver 110 receives, from the base station 200, N pieces of setting information, each indicating the parameters of a respective one of N of the SSBs transmitted simultaneously at different frequencies. Here, each of the N pieces of setting information may be OffsetToPointA, that is, information indicating a frequency offset between the lowest-frequency subcarrier of the corresponding SSB and the reference point of the resource block grid in units of resource blocks. Each of the N pieces of setting information may be Kssb (ssb-SubcarrierOffset), that is, information indicating a frequency offset between the lowest-frequency subcarrier of the corresponding SSB and the low-frequency boundary of the resource block to which the subcarrier belongs, in units of subcarriers. Each of the N pieces of setting information may be absoluteFrequencySSB, that is, information indicating the frequency of the corresponding SSB.

### (5) System Operation Example

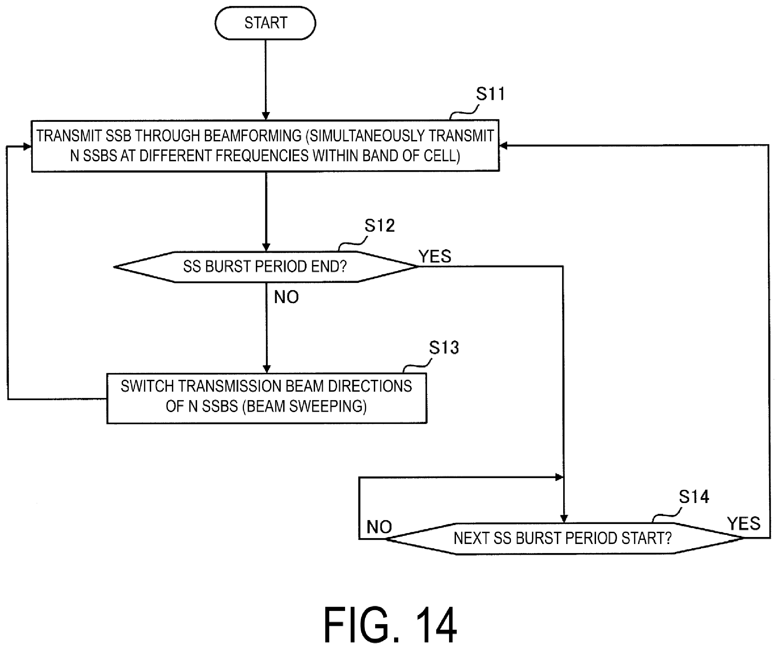

FIG. 14 is a diagram illustrating an operation example of the base station 200 (network node) according to the present embodiment.

In step S11, the base station 200 transmits an SSB used for a cell search performed by the UE 100 through beamforming. The base station 200 simultaneously transmits N SSBs within a band of its own cell at different frequencies and in different BF patterns.

In step S12, the base station 200 checks whether the SS burst period (that is, beam sweeping) has ended. Specifically, the base station 200 checks whether the transmission of all SSBs to be transmitted during the current SS burst period has been completed.

When the SS burst period has not ended (step S12: NO), in step S13, the base station 200 switches the transmission beam directions (BF patterns) of the N SSBs and returns the process to step S11.

When the SS burst period ends (step S12: YES), in step S14, the base station 200 checks whether the next SS burst period has started. When the next SS burst period starts (step S14: YES), the base station 200 returns the process to step S11, and simultaneously transmits N SSBs within a band of its own cell at different frequencies and in different BF patterns.

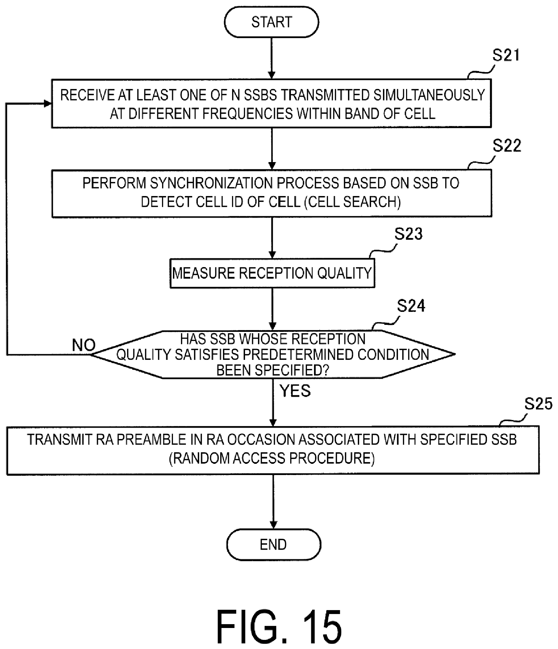

FIG. 15 is a diagram illustrating an operation example of the UE 100 (user equipment) according to the present embodiment.

In step S21, the UE 100 receives an SSB which is transmitted from the base station 200 through beamforming and to which beam sweeping that switches the transmission beam direction at a predetermined time interval is applied.

In step S22, the UE 100 performs a cell search on the basis of the received SSB. Specifically, the UE 100 acquires time and frequency synchronization with the cell and detects the cell ID of the cell.

In step S23, the UE 100 measures the received SSB reception quality (for example, RSRP).

In step S24, the UE 100 determines whether an SSB whose reception quality satisfies a predetermined condition has been specified. When no SSB whose reception quality satisfies the predetermined condition is specified (step S24: NO), the UE 100 returns the process to step S21.

On the other hand, when an SSB whose reception quality satisfies the predetermined condition is specified (step S24: YES), in step S25, an RA preamble is transmitted in the RA occasion associated with the specified SSB.

### (6) other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although an example in which the base station is an NR base station (gNB) has been described in the above-described embodiments, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each process performed by the UE 100 or the base station 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, but may be, for example, a recording medium such as a CD-ROM or a DVD-ROM. A circuit that executes each process performed by the UE 100 or the base station 200 may be integrated, and at least a portion of the UE 100 or the base station 200 may be configured as a semiconductor integrated circuit (chipset, SoC).

The functions achieved by the UE 100 or the base station 200 (the network node) may be implemented in a circuitry or a processing circuitry programmed to perform the described functions, including a general-purpose processor, a special-purpose processor, an integrated circuit, application specific integrated circuits (ASICs), a central processing unit (CPU), a conventional circuit, and/or combinations thereof. The processor may include transistors and other circuits and may be considered a circuitry or a processing circuitry. The processor may be a programmed processor that executes a program stored in the memory. As used herein, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". Similarly, the phrase "depending on" means both "only depending on" and "at least partially depending on". The terms "include," "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variations can be made without departing from the gist of the present disclosure. The embodiments, the operation examples, or the different types of processing may be combined as appropriate as long as they are not inconsistent with each other.

### (7) Supplement

Features relating to the embodiments described above are described below as supplementary notes.

### Supplementary Note 1

A network node configured to manage a cell in a mobile communication system, the network node including:
a transmitter configured to transmit a synchronization signal block used for a cell search performed by a user equipment through beamforming; and
a controller configured to perform beam sweeping that switches a transmission beam direction of the synchronization signal block at a predetermined time interval,
wherein the controller controls the transmitter to simultaneously transmit N (N is an integer of 2 or greater) of the synchronization signal blocks at different frequencies within a band of the cell.

### Supplementary Note 2

The network node according to supplementary note 1, wherein the controller controls the transmitter to simultaneously transmit N of the synchronization signal blocks within the band of the cell at different frequencies and in different transmission beam directions.

### Supplementary Note 3

The network node according to supplementary note 1 or 2, wherein during a synchronization signal burst period that periodically occurs, the transmitter transmits a first synchronization signal block group at a first frequency within the band of the cell and transmits a second synchronization signal block group at a second frequency within the band of the cell.

### Supplementary Note 4

The network node according to supplementary note 3, wherein the controller controls the beam sweeping so that during the synchronization signal burst period, the first synchronization signal block group covers a first portion of a coverage area of the cell and the second synchronization signal block group covers a second portion of the coverage area.

### Supplementary Note 5

The network node according to supplementary note 3, wherein the controller assigns an identifier to the synchronization signal block so that an identifier of the synchronization signal block in the first synchronization signal block group and an identifier of the synchronization signal block in the second synchronization signal block group do not duplicate each other.

### Supplementary Note 6

The network node according to supplementary note 3, wherein the controller assigns an identifier to the synchronization signal block so that an identifier of the synchronization signal block in the first synchronization signal block group and an identifier of the synchronization signal block in the second synchronization signal block group at least partially duplicate each other and assigns different frequency indexes to the synchronization signal block in the first synchronization signal block group and the synchronization signal block in the second synchronization signal block group.

### Supplementary Note 7

The network node according to any one of supplementary notes 1 to 6, wherein the transmitter transmits N pieces of setting information, each indicating a parameter of a respective one of N of the synchronization signal blocks transmitted simultaneously at different frequencies.

### Supplementary Note 8

The network node according to supplementary note 7, wherein each of the N pieces of setting information is information indicating a frequency offset between a lowest-frequency subcarrier of a corresponding synchronization signal block and a reference point of a resource block grid in units of resource blocks.

### Supplementary Note 9

The network node according to supplementary note 7, wherein each of the N pieces of setting information is information indicating a frequency offset between a lowest-frequency subcarrier of a corresponding synchronization signal block and a low-frequency boundary of a resource block to which the subcarrier belongs, in units of subcarriers.

### Supplementary Note 10

The network node according to supplementary note 7, wherein each of the N pieces of setting information is information indicating a frequency of a corresponding synchronization signal block.

### Supplementary Note 11

A user equipment configured to perform wireless communication with a network node configured to manage a cell in a mobile communication system, the user equipment including: a receiver configured to receive a synchronization signal block which is transmitted from the network node through beamforming and to which beam sweeping that switches a transmission beam direction at a predetermined time interval is applied; and
a controller configured to perform a cell search on the basis of the synchronization signal block, wherein the receiver receives at least one of N (N is an integer of 2 or greater) of the synchronization signal blocks transmitted simultaneously at different frequencies within a band of the cell.

### Supplementary Note 12

The user equipment according to supplementary note 11, wherein the receiver receives at least one of N of the synchronization signal blocks transmitted simultaneously within the band of the cell at different frequencies and in different transmission beam directions.

### Supplementary Note 13

The user equipment according to supplementary note 12, wherein during a synchronization signal burst period that periodically occurs, the receiver receives a first synchronization signal block group at a first frequency within the band of the cell and receives a second synchronization signal block group at a second frequency within the band of the cell.

### Supplementary Note 14

The user equipment according to supplementary note 13, wherein an identifier is assigned to the synchronization signal block so that an identifier of the synchronization signal block in the first synchronization signal block group and an identifier of the synchronization signal block in the second synchronization signal block group do not duplicate each other.

### Supplementary Note 15

The user equipment according to supplementary note 13, wherein
an identifier is assigned to the synchronization signal block so that an identifier of the synchronization signal block in the first synchronization signal block group and an identifier of the synchronization signal block in the second synchronization signal block group at least partially duplicate each other, and
different frequency identifiers are assigned to the synchronization signal block in the first synchronization signal block group and the synchronization signal block in the second synchronization signal block group.

### Supplementary Note 16

The user equipment according to any one of supplementary notes 11 to 15, wherein the receiver receives, from the network node, N pieces of setting information, each indicating a parameter of a respective one of N of the synchronization signal blocks transmitted simultaneously at different frequencies.

### Supplementary Note 17

The user equipment according to supplementary note 16, wherein each of the N pieces of setting information is information indicating a frequency offset between a lowest-frequency subcarrier of a corresponding synchronization signal block and a reference point of a resource block grid in units of resource blocks.

### Supplementary Note 18

The user equipment according to supplementary note 16, wherein each of the N pieces of setting information is information indicating a frequency offset between a lowest-frequency subcarrier of a corresponding synchronization signal block and a low-frequency boundary of a resource block to which the subcarrier belongs, in units of subcarriers.

### Supplementary Note 19

The user equipment according to supplementary note 16, wherein each of the N pieces of setting information is information indicating a frequency of a corresponding synchronization signal block.

### Supplementary Note 20

A communication method used by a network node configured to manage a cell in a mobile communication system, the communication method including:
transmitting a synchronization signal block used for a cell search performed by a user equipment through beamforming; and
performing beam sweeping that switches a transmission beam direction of the synchronization signal block at a predetermined time interval,
wherein the transmitting a synchronization signal block includes simultaneously transmitting N (N is an integer of 2 or greater) of the synchronization signal blocks at different frequencies within a band of the cell.

### Supplementary Note 21

A communication method used by a user equipment configured to perform wireless communication with a network node configured to manage a cell in a mobile communication system, the communication method including:
receiving a synchronization signal block which is transmitted from the network node through beamforming and to which beam sweeping that switches a transmission beam direction at a predetermined time interval is applied; and
performing a cell search on the basis of the synchronization signal block,
wherein the receiving a synchronization signal block includes receiving at least one of N (N is an integer of 2 or greater) of the synchronization signal blocks transmitted simultaneously at different frequencies within a band of the cell.

### REFERENCE SIGNS

1: Network
10: RAN
20: CN
100: UE
110: Receiver
120: Transmitter
130: Controller
140: Wireless communicator
200 Base station
210: Transmitter
220: Receiver
230: Controller
240: NW communicator
250: Wireless communicator
300: CN apparatus

## Claims

1. A network node configured to manage a cell in a mobile communication system, the network node comprising:
a transmitter configured to transmit a synchronization signal block used for a cell search performed by a user equipment through beamforming; and
a controller configured to perform beam sweeping that switches a transmission beam direction of the synchronization signal block at a predetermined time interval,
wherein the controller controls the transmitter to simultaneously transmit N (N is an integer of 2 or greater) of the synchronization signal blocks at different frequencies within a band of the cell.

2. The network node according to claim 1, wherein the controller controls the transmitter to simultaneously transmit N of the synchronization signal blocks within the band of the cell at different frequencies and in different transmission beam directions.

3. The network node according to claim 1, wherein during a synchronization signal burst period that periodically occurs, the transmitter transmits a first synchronization signal block group at a first frequency within the band of the cell and transmits a second synchronization signal block group at a second frequency within the band of the cell.

4. The network node according to claim 3, wherein the controller controls the beam sweeping so that during the synchronization signal burst period, the first synchronization signal block group covers a first portion of a coverage area of the cell and the second synchronization signal block group covers a second portion of the coverage area.

5. The network node according to claim 3, wherein the controller assigns an identifier to the synchronization signal block so that an identifier of the synchronization signal block in the first synchronization signal block group and an identifier of the synchronization signal block in the second synchronization signal block group do not duplicate each other.

6. The network node according to claim 3, wherein the controller assigns an identifier to the synchronization signal block so that an identifier of the synchronization signal block in the first synchronization signal block group and an identifier of the synchronization signal block in the second synchronization signal block group at least partially duplicate each other and assigns different frequency indexes to the synchronization signal block in the first synchronization signal block group and the synchronization signal block in the second synchronization signal block group.

7. The network node according to claim 1, wherein the transmitter transmits N pieces of setting information, each indicating a parameter of a respective one of N of the synchronization signal blocks transmitted simultaneously at different frequencies.

8. The network node according to claim 7, wherein each of the N pieces of setting information is information indicating a frequency offset between a lowest-frequency subcarrier of a corresponding synchronization signal block and a reference point of a resource block grid in units of resource blocks.

9. The network node according to claim 7, wherein each of the N pieces of setting information is information indicating a frequency offset between a lowest-frequency subcarrier of a corresponding synchronization signal block and a low-frequency boundary of a resource block to which the subcarrier belongs, in units of subcarriers.

10. The network node according to claim 7, wherein each of the N pieces of setting information is information indicating a frequency of a corresponding synchronization signal block.

11. A user equipment configured to perform wireless communication with a network node configured to manage a cell in a mobile communication system, the user equipment comprising:
a receiver configured to receive a synchronization signal block which is transmitted from the network node through beamforming and to which beam sweeping that switches a transmission beam direction at a predetermined time interval is applied; and
a controller configured to perform a cell search on the basis of the synchronization signal block,
wherein the receiver receives at least one of N (N is an integer of 2 or greater) of the synchronization signal blocks transmitted simultaneously at different frequencies within a band of the cell.

12. The user equipment according to claim 11, wherein the receiver receives at least one of N of the synchronization signal blocks transmitted simultaneously within the band of the cell at different frequencies and in different transmission beam directions.

13. The user equipment according to claim 12, wherein during a synchronization signal burst period that periodically occurs, the receiver receives a first synchronization signal block group at a first frequency within the band of the cell and receives a second synchronization signal block group at a second frequency within the band of the cell.

14. The user equipment according to claim 13, wherein an identifier is assigned to the synchronization signal block so that an identifier of the synchronization signal block in the first synchronization signal block group and an identifier of the synchronization signal block in the second synchronization signal block group do not duplicate each other.

15. The user equipment according to claim 13, wherein
an identifier is assigned to the synchronization signal block so that an identifier of the synchronization signal block in the first synchronization signal block group and an identifier of the synchronization signal block in the second synchronization signal block group at least partially duplicate each other, and
different frequency identifiers are assigned to the synchronization signal block in the first synchronization signal block group and the synchronization signal block in the second synchronization signal block group.

16. The user equipment according to claim 11, wherein the receiver receives, from the network node, N pieces of setting information, each indicating a parameter of a respective one of N of the synchronization signal blocks transmitted simultaneously at different frequencies.

17. The user equipment according to claim 16, wherein each of the N pieces of setting information is information indicating a frequency offset between a lowest-frequency subcarrier of a corresponding synchronization signal block and a reference point of a resource block grid in units of resource blocks.

18. The user equipment according to claim 16, wherein each of the N pieces of setting information is information indicating a frequency offset between a lowest-frequency subcarrier of a corresponding synchronization signal block and a low-frequency boundary of a resource block to which the subcarrier belongs, in units of subcarriers.

19. The user equipment according to claim 16, wherein each of the N pieces of setting information is information indicating a frequency of a corresponding synchronization signal block.

20. A communication method used by a network node configured to manage a cell in a mobile communication system, the communication method comprising:
transmitting a synchronization signal block used for a cell search performed by a user equipment through beamforming; and
performing beam sweeping that switches a transmission beam direction of the synchronization signal block at a predetermined time interval,
wherein the transmitting a synchronization signal block comprises simultaneously transmitting N (N is an integer of 2 or greater) of the synchronization signal blocks at different frequencies within a band of the cell.

21. A communication method used by a user equipment configured to perform wireless communication with a network node configured to manage a cell in a mobile communication system, the communication method comprising:
receiving a synchronization signal block which is transmitted from the network node through beamforming and to which beam sweeping that switches a transmission beam direction at a predetermined time interval is applied; and
performing a cell search on the basis of the synchronization signal block,
wherein the receiving a synchronization signal block comprises receiving at least one of N (N is an integer of 2 or greater) of the synchronization signal blocks transmitted simultaneously at different frequencies within a band of the cell.
